# DEMANDE DE BREVET EUROPEEN

(11) **EP 2 149 648 A1**
(43) Date de publication de la demande: **03.02.2010**
(21) Numéro de dépôt: 09300007.3
(22) Date de dépôt: 23.06.2009
(51) Int. Cl.: E04D 13/18, H01L 31/048, F24J 2/52

(54) **Dispositif de fixation d'élément de couverture de toiture**

(30) Priorité: 31.07.2008 FR 0855279
(71) Demandeur: Qualitelec, 11000 Carcassonne (FR)
(72) Inventeur: Delpeyrou, José, 11000, CARCASSONNE (FR)
(74) Mandataire: Rhein, Alain

(57) **Abrégé**

La présente invention concerne un dispositif (1) de fixation d'élément de couverture de toiture, notamment un panneau photovoltaïque (2), ladite toiture étant constituée de tôles (3) crènelées sous forme d'au moins une onde présentant un décroché sous forme d'une crête (4) reliant deux flancs latéraux (5) par rapport au plan de ladite tôle (3), caractérisé par le fait que ledit dispositif (1) se présente sous la forme d'un profilé longitudinal formant un rail et comprenant des moyens de fixation dudit élément de toiture longitudinalement sur ladite onde, lesdits moyens de fixation comprenant deux ailes latérales (7) saillantes par rapport à une face (8) dudit profilé et s'étendant sur toute ou partie de la longueur de ce dernier, de manière à coopérer par emboîtement desdites ailes (7) le long des flancs (5) et de ladite crête (4). L'invention concerne aussi une telle toiture équipée de ce dispositif.

## Description

La présente invention entre dans le domaine de la construction, plus particulièrement dans la réalisation de toiture et de couverture de toit.

L'invention concerne un dispositif de fixation à une charpente d'au moins un élément de toiture.

Le dispositif selon l'invention se veut à même d'offrir une fixation adaptée à toute toiture en tôle, plus particulièrement composée de tôles crénelées reposant sur une charpente. De telles tôles sont généralement constituées en un matériau métallique, ainsi que la charpente. Lesdites tôles présentent une forme crénelée, à savoir que chaque tôle est réalisée par profilage de manière à comprendre au moins à chaque extrémité une onde s'étendant sur toute la longueur de ladite tôle. Selon une coupe transversale, une telle onde se présente sous la forme d'un décroché supérieur par rapport au plan de la tôle et présentant une crête plate. Deux ondes successives sont séparées par une largeur de tôle définissant un bac.

De plus, à une extrémité d'une première tôle se situe une onde recouverte par l'onde de recouvrement d'une deuxième tôle juxtaposée, tandis que l'extrémité opposée de ladite première tôle comprend une onde recouverte par l'onde de recouvrement d'une troisième tôle adjacente. Ce chevauchement de tôles par le recouvrement des ondes assure l'étanchéité et améliore la résistance d'une telle toiture.

Le dispositif selon l'invention trouvera une application préférentielle mais non limitative en tant que support d'élément de toiture de type panneau de captation solaire, notamment un panneau constitué de cellules photovoltaïques.

De manière connue, la fixation de panneau de couverture de toit, à savoir un panneau photovoltaïque dans le cadre préférentiel de l'invention, requiert un support se présentant généralement sous la forme de pattes.

Plusieurs documents Japonais décrivent une telle fixation par pattes, à savoir les documents JP 2001 303724, JP 09 177272, JP 2001 140416, JP 2000234423 ou JP 2003 155803.

Ces réalisations ont en commun de nécessiter un crénelage particulier de la toiture. En effet, afin de permettre le maintien par enserrement ou pincement de la crête, les extrémités desdites pattes doivent s'insérer au niveau d'une nervure ménagée longitudinalement sur chacun des flancs de l'onde. Une telle fixation s'effectue uniquement au niveau des tôles, sans intégration à la toiture, et aussi ponctuellement, sans répartition de la charge sur la longueur des tôles.

De plus, les pattes de l'état de la technique sont constituées de plaques recourbées, présentant une certainement flexibilité pour autoriser leur torsion au moment de l'enserrement de la crête. La résistance du matériau utilisé reste donc précaire, notamment en cas de fortes intempéries.

Une autre solution envisagée consiste en des longerons formant un rail venant se fixer sur les crêtes des tôles. Il sert alors de support audit panneau photovoltaïque. Pour ce faire, ce rail s'étend le long de la toiture, orthogonalement à la pente. Il repose sur les crêtes des ondes, directement ou par l'intermédiaire d'une pièce de fixation, et est solidarisé aux longerons de la charpente au travers desdites tôles.

Un premier inconvénient réside dans la solidarisation desdits rails sur les tôles. En effet, il est souvent nécessaire de perforer les tôles pour assujettir les rails, générant des problèmes potentiels dans l'étanchéité de la toiture.

De plus, lesdits rails sont destinés à servir de support aux panneaux photovoltaïques dont les points de fixation sont strictement définis par le fabricant, de sorte que l'ajustement des rails ne permet pas une fixation précise des panneaux, notamment en raison des différentes dimensions de panneaux par rapport à l'écartement des ondes des tôles.

Un autre inconvénient des fixations connues réside dans le fait que l'ajout d'éléments de fixation sur la toiture constitue une semi intégration et n'est pas en adéquations avec les normes et la législation en vigueur. Cette fixation sur les tôles reste précaire en cas de fortes intempéries, pouvant générer un arrachement de l'intégralité de la couverture de toiture.

L'invention a donc pour but de pallier les inconvénients de l'état de la technique en proposant une fixation venant s'intégrer à la toiture existante, au niveau de la charpente. Cette fixation s'effectue dans le sens de la pente de la toiture, longitudinalement aux ondes des tôles le long de leur crête. De plus, elle offre un maintien et une assise répartis tout le long de la crête des tôles.

Pour ce faire, la présente invention concerne un dispositif de fixation d'élément de couverture de toiture, notamment un panneau photovoltaïque, ladite toiture étant constituée de tôles crénelées sous forme d'au moins une onde présentant un décroché sous forme d'une crête par rapport au plan de ladite tôle.

Plus particulièrement, ledit dispositif se présente se présente sous la forme d'un profilé longitudinal comprenant des moyens de fixation dudit élément de toiture longitudinalement sur ladite onde, lesdits moyens de fixation comprenant deux ailes latérales saillantes par rapport à une face dudit profilé et s'étendant sur toute ou partie de la longueur de ce dernier, de manière à coopérer par emboîtement desdites ailes le long des flancs et de ladite crête.

L'invention concerne aussi une toiture constituée de tôle crènelées sous forme d'un moins une onde présentant un décroché sous forme d'une crête reliant deux flancs latéraux par rapport au plan de ladite tôle, caractérisé par le fait qu'elle comprend au moins un tel dispositif de fixation d'élément de couverture de toiture, notamment un panneau photovoltaïque, ledit dispositif s'étendant longitudinalement au niveau de la crête de ladite tôle.

Selon une autre caractéristique, ledit dispositif comprend des moyens de fixation directement sur la charpente, au travers de ladite tôle.

D'autres caractéristiques et avantages de l'invention ressortiront de la description détaillée qui va suivre des modes de réalisation non limitatifs de l'invention, en référence aux figures annexées dans lesquelles :
- la figure 1 représente une vue en perspective d'une toiture comprenant un dispositif selon l'invention ; et
- la figure 2 est une vue en coupe transversale de la section dudit dispositif de fixation.

La présente invention concerne un dispositif 1 de fixation d'élément de couverture de toiture.

On notera qu'un tel élément de toiture peut être de toute forme et de toute dimension. Plus particulièrement, il se présente sous la forme d'une plaque rectangulaire ou carrée. Selon le mode préférentiel de réalisation, un tel élément est constitué par un panneau photovoltaïque 2.

Le dispositif 1 selon l'invention est spécifiquement destiné à la fixation sur une toiture constituée de tôles 3 crénelées. Une telle tôle 3 est réalisée par profilage ou pliage à partir d'une plaque, généralement composé d'un matériau métallique. Elle comprend un crénelage sous forme d'au moins une onde présentant un décroché par rapport au plan de ladite tôle 3. Ce décroché présente des flancs latéraux 5 reliés par une surface plane formant une crête 4.

Comme évoqué précédemment, une onde constitue un décroché par rapport au plan de la tôle 3 formant un bac 6. De plus, une onde s'étend le long de ladite tôle 3. En particulier, une tôle 3 présente plusieurs ondes parallèles séparées par des bacs 6.

Une caractéristique essentielle de l'invention réside en ce que le dispositif de fixation 1 s'étend longitudinalement au niveau de la crête 4 d'une onde. Ainsi, une toiture réalisée selon l'invention comprend au moins un dispositif de fixation 1 assujetti le long des ondes des tôles 3, dans le sens de la pente.

Pour ce faire, ledit dispositif 1 de fixation se présente sous la forme d'un profilé, tel un rail, comprenant des moyens de fixation dudit élément de toiture, soit dudit panneau photovoltaïque 2, sur ladite onde, le long de cette dernière.

Plus particulièrement, lesdits moyens de fixation comprennent deux ailes latérales 7 saillantes par rapport à une face 8 dudit profilé et s'étendant sur toute ou partie de la longueur de ce dernier. Ainsi lesdites ailes 7 peuvent être continues ou discontinues, en vis-à-vis ou décalée l'une par rapport à l'autre. Lesdites ailes 7 maintiennent latéralement ledit profilé, immobilisant ce dernier au somment de l'onde.

Selon le mode de réalisation préférentiel, lesdites ailes 7 s'étendent sur toute la longueur de la face inférieure dudit profilé.

Lesdites ailes 7 sont donc espacées sur une largeur au moins égale à la largeur de ladite crête 4, notamment une largeur légèrement supérieure à la largeur de la crête 4.

De plus, lesdites ailes 7 sont orientées selon un angle α au moins égale à la pente dudit décroché. En d'autres termes les ailes 7 présentent une inclinaison sensiblement identique à celle des flancs 5 dudit décroché.

Ainsi, les ailes 7 forment avec la face 8 une partie femelle au sein du profilé de manière à coopérer par emboîtement avec le décroché formant une partie mâle. Lesdites ailes 7 s'étendent sur toute ou partie de la longueur des flancs 5, offrant un maintien transversal dudit dispositif de fixation 1.

Le profilé longitudinal offre donc une assise et une emprise par ses ailes 7 de la crête de l'onde sur lequel il repose.

De plus, le maintien dans le sens longitudinal du profilé peut s'effectuer par un vissage sur la charpente, au travers de la crête 4 de la tôle 3. Plus particulièrement, les vis de fixation de la tôle 3 sur la charpente peuvent servir pour fixer le profilé directement sur la charpente. De cette manière, le dispositif de fixation 1 fait partie intégrante de la toiture.

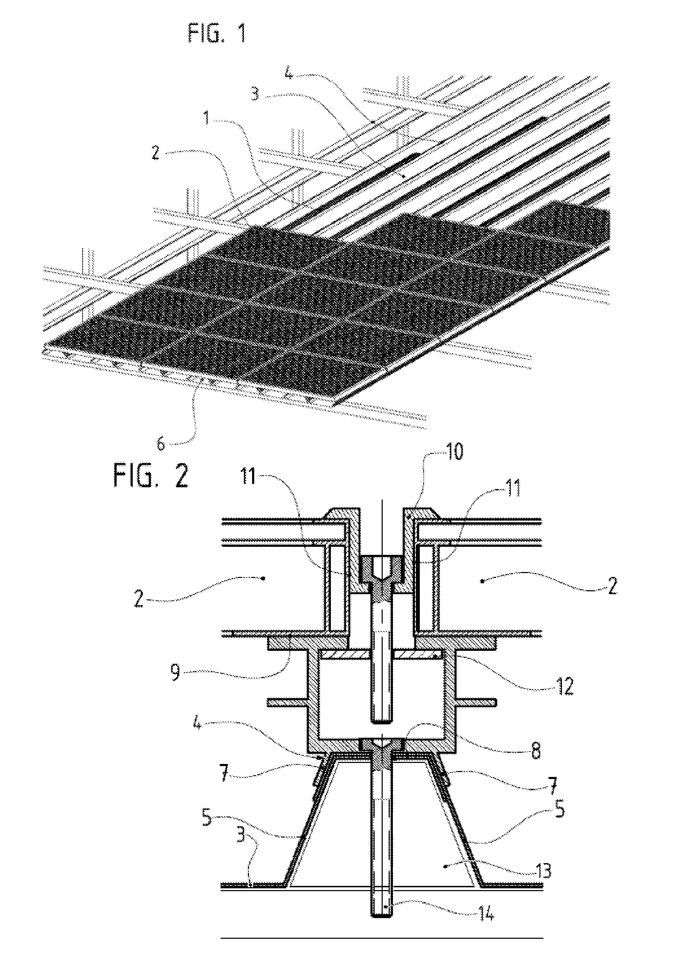

Selon le mode particulier de réalisation représenté sur la figure 2, peut être insérée, en partie sous-jacente de la crête recevant le profilé, une contre-lame 13. Cette dernière améliore la tenue de la fixation en partie inférieure de la tôle 3, en particulier au moyen de vis 14 traversant la face inférieure du profilé et ladite tôle 3.

Cette vis peut venir se loger uniquement au sein de la contre-lame, cette dernière étant déjà assujettie à la charpente, ou bien la traverser de manière à se fixer directement sur la charpente, comme visible sur la figure 2.

De plus, en venant recouvrir les ondes, plusieurs profilés améliorent l'étanchéité et le maintien de celles-ci sur la charpente, offrant aussi une meilleure résistance à l'arrachement en cas de vent violent.

La jonction entre deux profilés peut s'effectuer au travers d'une pièce venant coopérer aux extrémités juxtaposées de chaque profilé, ladite pièce venant s'insérer au sein d'un logement ménagé au sein desdits profilés.

En particulier, un tel profilé peut présenter une forme en U, ladite plaque venant coulisser sur une partie de sa longueur, préférentiellement sur sa moitié, en recouvrement du côté inférieur de chacun des profilés adjacents. La plaque peut être rendue solidaires de chacun des profilés juxtaposés par la fixation à la charpente précédemment évoquée.

Selon une autre caractéristique, lesdits moyens de fixation comprennent des moyens d'enserrement d'au moins un élément de toiture, plus particulièrement de deux panneaux photovoltaïques.

De tels moyens d'enserrement sont constitués, d'une part, par la face opposée 9 dudit profilé constituant une zone de réception d'au moins un élément de toiture et, d'autre part, d'au moins une patte 10 de recouvrement au moins partiel dudit élément de toiture, notamment du bord de chaque panneau photovoltaïque venant reposer sur ladite face opposée 9.

Ladite patte 10 se présente sous la forme d'un U s'insérant entre les chants 11 des deux panneaux 2, les branches du U de ladite patte venant le long desdits chants 11.

En partie haute de ladite patte 10 des rebords saillant viennent recouvrir partiellement la surface de chaque panneau 2.

Plus particulièrement, chaque patte 10 peut se présenter sous la forme d'un profilé s'étendant sur toute ou partie de la longueur du profilé du dispositif 1, s'insérant au sein de la rigole formée par les bords des panneaux 2.

De plus, en extrémité latérale de toiture, une patte 10 spécifique peut venir reposer sur la face opposée 9 afin d'offrir un maintien adapté, comme si un autre panneau 2 était présent en vis-à-vis.

A ce titre, ladite zone et ladite patte 10 de recouvrement sont rendus solidaires par vissage. Ce dernier peut s'effectuer, au travers de ladite patte 10, avec un alésage ménagé dans une platine 12 bloquée dans un espace sous ladite face opposée 9 au sein dudit profilé.

On notera que le blocage de la platine 12 résulte de la forme de cette dernière par rapport audit espace. En effet, ladite platine 12 présente une forme polygonale de sorte que ses bords empêchent sa rotation au sein dudit espace.

Selon un autre mode de réalisation, la vis pour la solidarisation de la patte 10 avec le profilé peut venir remplacer la vis 14 de fixation sur la tôle 3 et la charpente, se fixant alors directement sur la contre-lame 13.

Selon une caractéristique optionnelle, ledit profilé peut comprendre sur ses côtés, sur toute ou partie de sa longueur, des rainures destinées à recevoir des câblages ou analogue ainsi que des insert de fixation de tels câbles. Ainsi maintenus dans cette goulotte, ces câbles sont davantage protégés, ne traînant pas au contact des tôles 3 sous jacentes.

L'invention se veut aussi à même d'adapter la fixation à la largeur des panneaux photovoltaïques. Comme évoqué précédemment, la largeur standard des bacs 6 des tôles 3 empêche la fixation de toute type de panneau de dimensions définies, au sommet desdites crêtes 4.

L'invention prévoit donc de remplacer les tôles 3 existantes par l'intermédiaire de tôle 3 réalisées sur mesure. Ainsi, les distances entre les crêtes 3 sont calculées en fonction de la taille des panneaux 2 à assujettir.

Pour ce faire, l'invention prévoit de réaliser chaque tôle 3 sur mesure par l'intermédiaire d'une profileuse à galets, ces derniers étant réglables de manière à modifier la largeur entre les ondes.

Un avantage obtenu par ce profilage sur mesure réside dans la longueur et la largeur des tôles 3 issues de cette fabrication. En effet, de telles tôles 3 peuvent atteindre des dimensions plus importantes que les tôles 3 standard, dimensions limitées par le transport et illimitées lors d'une réalisation de tôle 3 sur site.

Cette longueur accrue permet d'obtenir des toitures dont la pente ne comprend qu'une seule tôle 3, améliorant grandement l'étanchéité de la toiture et celle de la couverture par panneaux photovoltaïques 2.

De plus, cette largeur adaptable permet fixer avec précision les panneaux 2 aux profilés, garantissant une fixation selon les normes en vigueur.

Le dispositif de fixation 1 selon l'invention et la toiture pourvue de tels dispositifs 1 améliore la fixation d'élément de couverture de toiture, en particulier de panneaux photovoltaïques. De plus, le rehaussement des panneaux 2 par rapport à la surface des tôles 3 offre une ventilation supplémentaire, évitant les variations thermiques élevées et les risques de condenssation.

La conception particulière de l'invention permet une construction avec une pente supérieure à 5%. Elle s'adapte à la charpente existante pour une solidité, une fiabilité et une durée de vie accrues pour un coût inférieur, notamment en raison d'un temps de pose moins long générant une économie de main d'oeuvre.

Les profilés réalisés en tout type de matériau, plus spécifiquement mais non limitativement en aluminium, offre une légèreté à l'ensemble et rend plus aisé le transport ainsi que la pose. De plus, le recours à un matériau métallique permet d'accepter les contraintes thermiques et de dilatation.

Bien entendu, l'invention n'est pas limitée aux exemples illustrés et décrits précédemment qui peuvent présenter des variantes et modifications sans pour autant sortir du cadre de l'invention. En particulier, le dispositif de fixation 1 s'adapte à une paroi verticale constituée de tôles 3 comme évoqué précédemment.

## Revendications

1. Dispositif (1) de fixation d'élément de couverture de toiture, notamment un panneau photovoltaïque (2), ladite toiture étant constituée de tôles (3) crènelées sous forme d'au moins une onde présentant un décroché sous forme d'une crête (4) reliant deux flancs latéraux (5) par rapport au plan de ladite tôle (3), **caractérisé par le fait que** ledit dispositif (1) se présente sous la forme d'un profilé longitudinal comprenant des moyens de fixation dudit élément de toiture longitudinalement sur ladite onde, lesdits moyens de fixation comprenant deux ailes latérales (7) saillantes par rapport à une face (8) dudit profilé et s'étendant sur toute ou partie de la longueur de ce dernier, de manière à coopérer par emboîtement desdites ailes (7) le long des flancs (5) et de ladite crête (4).

2. Dispositif (1) de fixation selon la revendication 1, **caractérisé par le fait que** lesdites ailes (7) sont espacées sur une largeur au moins égale à la largeur de ladite crête (4) et sont orientées selon un angle (α) au moins égal à la pente dudit décroché.

3. Dispositif (1) selon l'une quelconque des revendications 1 ou 2, **caractérisé par le fait que** lesdits moyens de fixation comprennent des moyens d'enserrement d'au moins un élément de toiture, lesdits moyens d'enserrement étant constitués, d'une part, par la face opposée (9) dudit profilé constituant une zone de réception d'au moins ledit élément de toiture et, d'autre part, d'au moins une patte (10) de recouvrement au moins partiel dudit élément de toiture.

4. Dispositif (1) selon la revendication 3, **caractérisé par le fait que** ladite zone de réception et ladite patte de recouvrement sont rendus solidaires par vissage.

5. Dispositif (1) selon la revendication 4, **caractérisé par le fait que** le vissage s'effectue au travers de ladite patte (10) avec un alésage ménagé dans une platine (12) bloquée dans un espace sous ladite face opposée (9) au sein dudit profilé.

6. Dispositif (1) selon l'une quelconque des revendications 4 ou 5, **caractérisé par le fait que** le vissage s'effectue par des vis de fixation sur la charpente de la toiture au travers de la crête (4) de la tôle (3), de sorte que ledit profilé fasse partie intégrante de la toiture.

7. Toiture constituée de tôle (3) crènelées sous forme d'un moins une onde présentant un décroché sous forme d'une crête (4) reliant deux flancs latéraux (5) par rapport au plan de ladite tôle (3), **caractérisé par le fait qu'**elle comprend au moins un dispositif (1), selon l'une quelconque des revendications précédentes, de fixation d'élément de couverture de toiture, notamment un panneau photovoltaïque, ledit dispositif (1) s'étendant longitudinalement au niveau de la crête (4) de ladite tôle (3).

8. Toiture selon la revendication 7, **caractérisée par le fait que** ledit dispositif comprend des moyens de fixation directement sur la charpente, au travers de ladite tôle (3).
